# FASCICULE DE BREVET EUROPEEN

(11) **EP 0 901 670 B1**
(45) Date de publication et mention de la délivrance du brevet: **14.07.2004**
(21) Numéro de dépôt: 97950246.5
(22) Date de dépôt: 08.12.1997
(51) Int. Cl.: G06K 19/07

(54) **SYSTEME D'ECHANGE DE DONNEES PAR COMMUNICATION SANS CONTACT ENTRE UNE BORNE ET DES OBJETS PORTATIFS TELEALIMENTES**
KONTAKTLOSES DATENAUSTAUSCHSYSTEM ZWISCHEN EINEM LESER UND FERNGESPEISTEN TRAGBAREN GEGENSTÄNDEN
DATA EXCHANGE SYSTEM BY CONTACTLESS COMMUNICATION BETWEEN A TERMINAL AND REMOTE POWERED PORTABLE OBJECTS

(30) Priorité: 10.12.1996 FR 9615163
(43) Date de publication de la demande: 17.03.1999
(73) Titulaire: Régie Autonome des Transports Parisiens RATP, 75006 Paris (FR)
(72) Inventeur: WEHOWSKI, Frédéric, F-77220 Gretz Armainvillers (FR)
(74) Mandataire: Dupuis-Latour, Dominique
(86) Numéro de dépôt international: PCT/FR1997/002229
(87) Numéro de publication internationale: WO 1998/026370

(56) Documents cités:
- EP-A- 0 453 314
- WO-A-89/05549
- WO-A-89/07295
- US-A- 4 650 981
- PATENT ABSTRACTS OF JAPAN vol. 6, no. 151 (E-124), 11 août 1982 & JP 57 075050 A (HITACHI DENSHI LTD), 11 mai 1982,

## Description

L'invention concerne les techniques de communication sans contact entre un objet portatif et une borne.

L'échange de données sans contact est bien connu ; parmi les applications de cette technique, on trouve ― de façon non limitative ― le contrôle d'accès, le paiement électronique (applications du type "porte-monnaie électronique") et le télépéage, par exemple pour l'accès et le péage des transports en commun.

Dans ce dernier exemple, chaque usager est muni d'un objet portatif du type "carte sans contact" ou "badge sans contact", qui est un objet susceptible d'échanger les informations avec une "borne" fixe. (ou éventuellement mobile) en approchant le badge de cette dernière de manière à permettre un couplage mutuel non galvanique ("borne" sera le terme utilisé dans la présente description pour désigner le terminal émetteur/récepteur de données apte à coopérer avec les objets portatifs).

Plus précisément, ce couplage est réalisé en faisant varier un champ magnétique produit par une bobine d'induction (technique connue sous le nom de "procédé par induction"). La borne comporte à cet effet un circuit inductif excité par un signal alternatif qui produit dans l'espace environnant un champ magnétique alternatif. L'objet portatif se trouvant dans cet espace détecte ce champ et module en retour la charge de l'objet portatif couplé à la borne ; cette variation est détectée par la borne, établissant ainsi la communication bidirectionnelle recherchée.

L'invention vise le cas particulier dans lequel l'objet portatif est un objet portatif téléalimenté, c'est-à-dire qu'il tire son alimentation de l'énergie magnétique émise par la borne et, plus précisément, dans le cas où cette énergie de téléalimentation est recueillie par l'objet portatif au moyen de la même bobine que celle utilisée pour la fonction de communication.

L'invention vise également le cas où, en outre, les informations sont transmises de la borne à l'objet portatif par modulation d'amplitude ; l'objet portatif comporte alors des moyens démodulateurs de l'amplitude du signal capté par la bobine.

Le US-A-4 650 981 décrit un système de communication sans contact de ce type, dans lequel l'objet portatif est placé dans l'entrefer d'un circuit magnétique de la borne, le couplage étant réalisé lorsque l'utilisateur insère l'objet portatif dans une fente de lecture de la borne. La bobine de l'objet portatif vient donc se placer dans le circuit magnétique de la borne, ce qui permet d'assurer le couplage recherché, avec transmission bidirectionnelle d'informations entre borne et objet portatif et téléalimentation de l'objet portatif par l'énergie magnétique produite par la borne. L'objet portatif comporte à cet effet une bobine unique captant le champ magnétique issu de la borne et associée à des moyens convertisseurs (redressement et filtrage) permettant de produire une tension continue d'alimentation, ainsi que des moyens démodulateurs d'amplitude opérant en aval des moyens convertisseurs afin d'extraire le contenu informationnel du signal rayonné par la borne.

L'un des buts de la présente invention est de proposer une technique d'échange de données sans contact du type précité, mais qui soit applicable pour un champ magnétique rayonné en espace libre, c'est-à-dire lorsque l'objet portatif est simplement présent dans une étendue prédéterminée autour de la bobine de la borne, avec une orientation quelconque et à une distance variable de cette bobine : il s'agit de pouvoir établir une communication sans contact avec des bornes de type " mains libres" (par exemple par passage dans un portique de contrôle), ou avec des bornes où l'on demande simplement à l'utilisateur d'approcher son badge d'une zone de lecture de taille réduite ou de plaquer son badge contre celle-ci, mais avec une orientation quelconque et avec une certaine latitude géométrique entre borne et objet portatif. Le WO-A-89/05549 divulgue un système de ce type.

Dans un tel cas, la téléalimentation présente cependant l'inconvénient de dépendre du champ magnétique environnant, qui peut présenter des variations très importantes compte tenu de la plus ou moins grande proximité entre borne et objet portatif. Ces variations très importantes de champ magnétique provoquent, après redressement et filtrage, d'importantes variations de tension d'alimentation pour l'objet portatif, variations dont il est indispensable de s'affranchir au moyen d'un étage stabilisateur approprié.

Un autre inconvénient de la téléalimentation réside dans l'interférence possible entre les variations de la tension d'alimentation (dues aux variations du niveau moyen du champ magnétique en fonction de la distance entre objet et borne ou aux variations erratiques, du courant consommé) et la modulation du champ magnétique, lorsque cette modulation est une modulation d'amplitude : les variations parasitaires ou accessoires peuvent ainsi être interprétées à tort comme une modulation du signal, avec pour conséquence l'introduction d'erreurs dans la transmission.

Inversement. lorsque c'est l'objet qui émet des signaux vers la borne, la modulation par variation de charge du circuit accordé implique une variation forcée du courant consommé par l'objet portatif, ce qui a une répercussion sur l'alimentation générale des circuits de l'objet, et ce dernier risque se trouver sous-alimenté pendant certaines phases de la modulation.

Comme on le voit, la téléalimentation d'un objet portatif par un champ magnétique n'est pas dépourvue d'inconvénients (ces aspects seront explicités dans la description détaillée), ce qui a jusqu'à présent limité l'emploi de cette technique malgré ses avantages, ou l'a cantonné à des applications bien spécifiques, par exemple lorsque la distance entre borne et objet est faible et constante, comme dans le cas du US-A-4 650 981 précité, ce qui n'est généralement pas le cas des applications de télépéage.

L'invention a pour but de remédier à ces divers inconvénients, en proposant un système de communication sans contact entre une borne et un objet portatif téléalimenté qui permette une alimentation des circuits électroniques de l'objet en toute sécurité, sans risque d'interférences et avec une gestion optimale de l'énergie reçue de la borne et recueillie par l'objet portatif.

Un autre but de l'invention est de pouvoir permettre une communication de type synchrone entre borne et objet portatif, c'est-à-dire une communication dans laquelle le fonctionnement de la carte est cadencé par un signal d'horloge défini par la borne. Cette technique est utilisée couramment dans le cas des cartes à contacts (la norme ISO 7816-3 prévoyant spécifiquement une série de contacts pour la transmission du signal d'horloge dans le cas d'une communication synchrone), mais est peu utilisée, malgré ses avantages évidents, dans le cas des systèmes sans contact en raison de la difficulté de transmettre l'information de signal d'horloge de la borne à l'objet portatif.

Le système de l'invention est du type général précité enseigné par le US-A-4 650 981 précité, comportant les éléments énoncés par le préambule de la revendication 1.

Il est caractérisé par les éléments énoncés dans la partie caractérisante de la revendication 1.

L'invention vise également l'objet portatif exposé ci-dessus, comme énoncé par la revendication 3.

Diverses caractéristiques subsidiaires avantageuses de l'invention sont énoncées dans les sous-revendications.

On va maintenant décrire en détail un exemple de réalisation de l'invention, en référence aux dessins annexés sur lesquels les mêmes références numériques désignent des éléments identiques, ou fonctionnellement semblables.

La figure 1 est un schéma par blocs d'un système selon l'invention, dans son aspect le plus général, comportant une borne et un objet portatif dans le champ de cette borne.

La figure 2 montre une réalisation particulière de l'objet portatif de la figure 1.

La figure 3 détaille le circuit régulateur du schéma de la figure 2

Les figures 4 et 5 détaillent, dans deux variantes possibles, le circuit démodulateur du schéma de la figure 2.

La figure 6 est un exemple détaillé de réalisation du circuit démodulateur de la figure 5.

La figure 7 détaille le circuit extracteur d'horloge du schéma de la figure 2.

La figure 8 est une série de chronogrammes expliquant la manière dont l'objet portatif est téléalimenté et dont on extrait le signal d'horloge.

La figure 9 est une série de chronogrammes explicitant la transmission d'informations de la borne vers l'objet.

La figure 10 est une série de chronogrammes explicitant la transmission d'informations de l'objet vers la borne.

La figure 11 présente les différentes commutations opérées dans une carte mixte entre les deux modes de fonctionnement par contacts, sans contact.

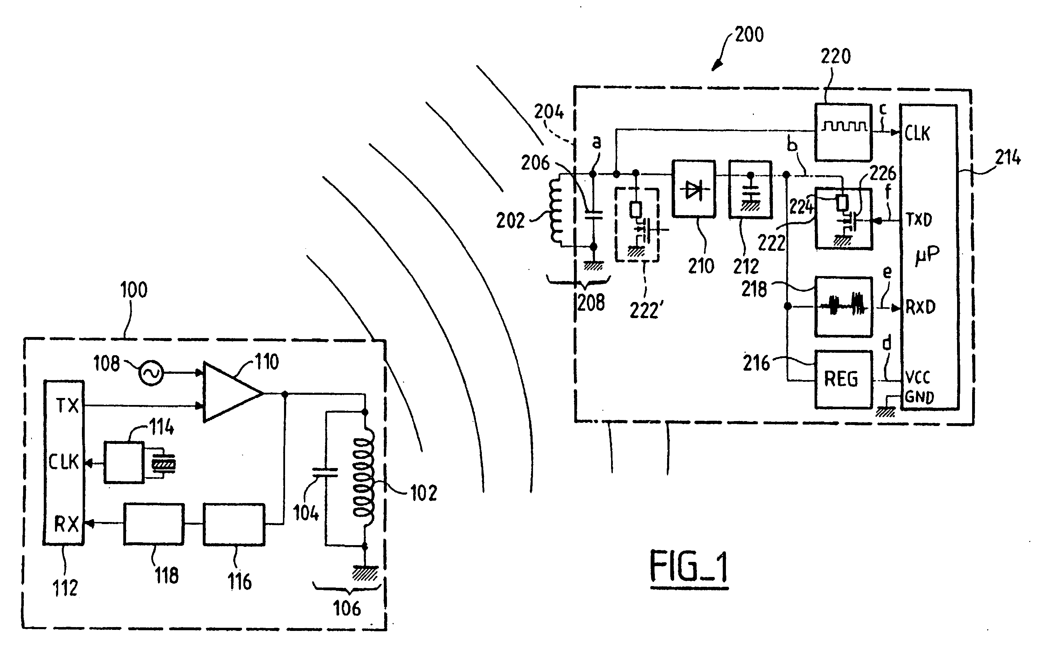

On va exposer un exemple de mise en oeuvre du système de l'invention en référence au schéma de la figure 1. Sur ce schéma, la référence 100 désigne une borne, qui peut être couplée avec un objet portatif 200 placé à son voisinage.

La borne comporte une bobine d'émission 102 qui, associée à un condensateur tel que 104, forme un circuit accordé 106 destiné à engendrer un champ d'induction magnétique modulé. La fréquence d'accord du circuit 106 est par exemple de 13,56 MHz, valeur bien entendu aucunement limitative, ce choix particulier tenant simplement au fait qu'elle correspond à une valeur autorisée par les normes européennes pour des fonctions de communication et de téléalimentation. En outre, cette valeur relativement élevée permet de concevoir des circuits avec des bobines possédant peu de spires, donc faciles et peu coûteuses à réaliser.

Le circuit accordé 106 est alimenté à partir d'un oscillateur haute fréquence à onde entretenue 108 et, pour la modulation, d'un étage mélangeur 110 piloté par les signaux à émettre TXD issus d'un circuit numérique 112. Le fonctionnement du circuit 112, et notamment le séquencement des signaux TYD, est cadencé par un circuit 114 produisant un signal d'horloge CLK.

Les étages de réception, qui extraient les données reçues RXD du signal prélevé aux bornes de la bobine 102, comportent un circuit démodulateur haute fréquence 116 ainsi qu'un circuit démodulateur de sous-porteuse 118 lorsque l'on a choisi, comme on l'indiquera plus bas, d'utiliser une modulation de sous-porteuse dans le sens objet portatif → borne (cette technique n'étant bien entendu aucunement limitative, la modulation pouvant également se faire en bande de base).

L'objet portatif 200, quant à lui, comporte une bobine 202 coopérant avec un circuit électronique 204 qui, avantageusement, est réalisé en technologie monolithique entièrement intégrée de manière à disposer d'un objet de petites dimensions, typiquement au format "carte de crédit" ; la bobine 202 est par exemple une bobine imprimée et l'ensemble des circuits 204 est réalisé sous forme d'un circuit, intégré spécifique (ASIC).

La bobine 202 forme avec un condensateur 206 un circuit résonnant 208 accordé sur une fréquence donnée (par exemple 13,56 MHz) permettant l'échange bidirectionnel de données avec la borne par la technique dite "par induction" ainsi que la téléalimentation par le champ magnétique capté par la bobine 202, c'est-à-dire la même bobine que celle servant à l'échange d'informations.

La tension alternative a recueillie aux bornes du circuit accordé 208 est appliquée à un étage redresseur simple ou double alternance 210, puis à un étage de filtrage 212, pour donner une tension redressée filtrée b.

L'objet portatif comporte également un étage de traitement numérique 214, typiquement réalisé à partir d'un microprocesseur, de mémoires RAM, ROM et EPROM et de circuits d'interfaçage.

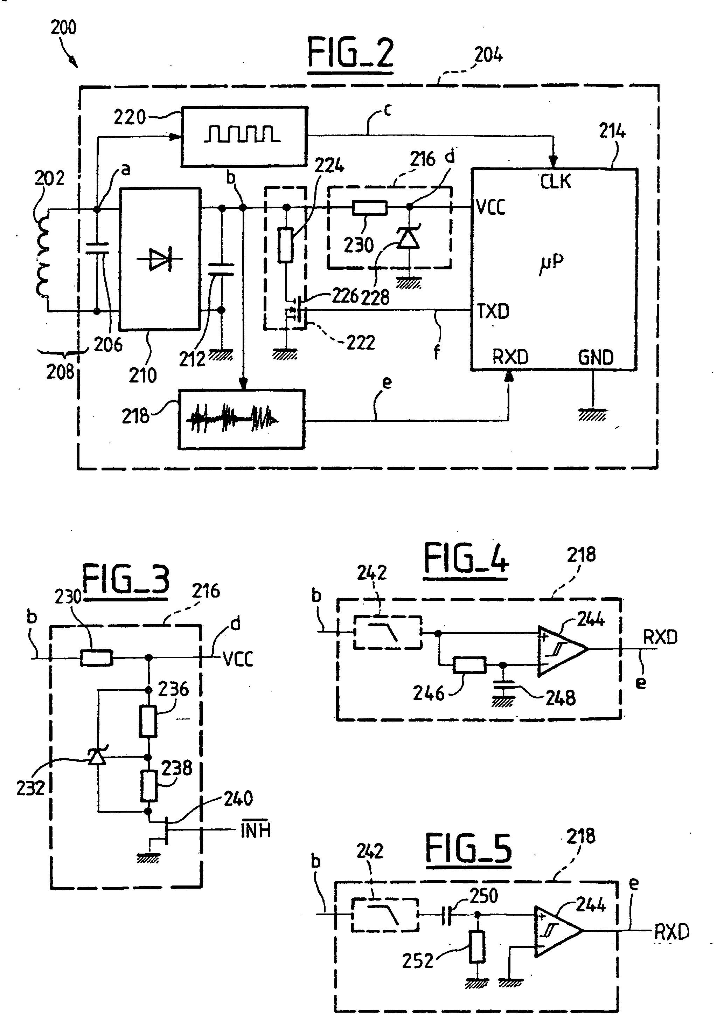

En aval des étages de redressement 210 et de filtrage 212 sont montés en parallèle un certain nombre d'étages spécifiques, comprenant :
― un étage régulateur 216, stabilisateur de tension, délivrant en sortie une tension continue, redressée, filtrée et stabilisée d, appliquée notamment à la borne d'alimentation positive VCC du circuit numérique 214, dont l'autre borne d'alimentation est la masse GND. Cet étage stabilisateur 216 peut être un stabilisateur de tension de type classique ou, en variante (mais de façon non limitative), un circuit spécifique qui sera décrit par la suite en référence aux figures 2 et 3.
― un étage démodulateur 218 recevant en entrée le signal b et délivrant en sortie un signal e démodulé appliqué à l'entrée de données RXD du circuit numérique 214.
   Ce démodulateur peut notamment être un démodulateur à détection de variation d'amplitude et/ou à seuil variable, comme on l'expliquera plus en détail ci-après en référence aux figures 4, 5 et 6.
― un étage extracteur d'horloge 220, recevant en entrée le signal a recueilli aux bornes du circuit accordé 208 et délivrant en sortie un signal c appliqué à l'entrée d'horloge CLK du circuit numérique 214. L'étage extracteur d'horloge 220 peut être placé soit en amont des étages de redressement 210 et de filtrage 212, comme illustré, soit en aval de ces étages, c'est-à-dire opérer sur le signal b au lieu du signal a ; cette dernière variante est cependant moins avantageuse, dans la mesure où l'extracteur d'horloge devra alors présenter une plus grande sensibilité pour compenser le lissage du signal introduit par le filtrage.
― un étage modulateur 222 qui opère, de manière en elle-même connue, par "modulation de charge", technique consistant à faire varier de manière contrôlée le courant consommé par le circuit accordé 208 situé dans le champ magnétique environnant engendré par la borne.
   Ce circuit modulateur 222 comporte un élément résistif 224 (résistance rapportée ou, en technologie monolithique, composant de type MOS sans grille faisant office de résistance) en série avec un élément de commutation 226 (transistor MOS) commandé par le signal de modulation f présent sur la sortie TXD du circuit numérique 214. En variante. l'étage modulateur 222, au lieu d'être placé en aval des circuits de redressement 210 et de filtrage 212, peut être également placé en amont de ces circuits, comme illustré en 222' sur la figure 1, c'est-à-dire directement aux bornes du circuit résonnant 208.

La structure générale ainsi proposée, où l'étage démodulateur 218 est situé en aval des étages de redressement 210 et de filtrage 212, présente l'avantage d'être moins sensible aux variations instantanées du signal.

En effet, dans le cas d'un objet portatif téléalimenté, le fait d'opérer la démodulation sur un signal redressé et filtré permet de réduire les effets des variations instantanées de l'énergie d'alimentation au cours d'un cycle de l'oscillation.

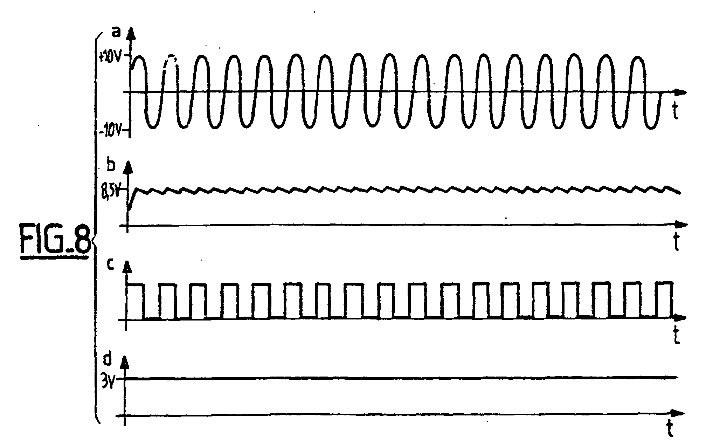

Cet aspect sera mieux compris lorsque l'on exposera le fonctionnement détaillé du démodulateur, en référence notamment aux chronogrammes de la figure 8.

On va maintenant décrire, en référence à la figure 2, une mise en oeuvre particulière de la structure de la figure 1, qui est notamment caractérisée par une structure particulière donnée à l'étage régulateur 216 qui est, comme on l'expliquera plus en détail par la suite, un étage de type "régulateur shunt" avec un composant shunt 228 servant à dériver de manière contrôlée le courant d'alimentation du circuit numérique 214, donc monté en dérivation entre les bornes VCC et la masse GND, combiné à un élément résistif série 230 placé dans la ligne d'alimentation VCC en amont du composant régulateur 228.

Le shunt 228 peut être avantageusement une diode Zener ou, de préférence, un composant rapporté ou intégré fonctionnellement équivalent à une diode Zener, par exemple un composant de la série LM185/LM285/LM385 de National Semiconductor Corporation, qui est un composant formant référence de tension (tension fixe ou ajustable selon le cas), avec un courant de polarisation de 20 µA seulement, une très faible impédance dynamique et une plage de courants de fonctionnement allant de 20µA à 20 mA. Le composant 228 peut également être un équivalent monolithique, intégré sur l'ASIC, d'un tel composant de référence de tension.

La figure 3 décrit une réalisation particulière de ce circuit 216, avec un composant du type décrit ci-dessus dont l'entrée de référence de tension 234 est polarisée à une valeur prédéterminée par un pont diviseur 236, 238 monté entre VCC et la masse.

L'élément résistif 230 peut être une résistance rapportée ou, avantageusement, un composant monolithique intégré, par exemple (comme pour le composant 224) un élément MOS faisant office de résistance.

On prévoit en outre, avantageusement, un composant de commutation, tel qu'un transistor MOS 240, qui est maintenu passant en fonctionnement normal par application d'un signal INH/ sur sa grille. On peut faire basculer ce transistor à l'état bloqué par application d'un simple signal de commande INH (notamment une commande logicielle issue du circuit de calcul 214) qui a pour effet d'inhiber le fonctionnement du régulateur shunt, le circuit se comportant alors comme si celui-ci avait été omis.

Cette possibilité d'inhibition du régulateur shunt peut notamment être utilisée lorsque l'on souhaite alimenter le microprocesseur sous une tension élevée sans risque de détruire l'étage régulateur.

Ce cas se présente notamment pour les besoins d'un test, ou lorsque l'on est en présence d'un objet portatif mixte pouvant être utilisé au choix en mode "sans contact" (avec mise en service du régulateur) ou en mode "avec contacts" (avec inhibition du régulateur), la tension d'alimentation régulée étant dans ce dernier cas directement appliquée sur l'un des contacts de l'objet portatif sans qu'il soit besoin de procéder à une régulation spécifique, comme dans le cas de la téléalimentation.

On va maintenant décrite plus en détail l'étage démodulateur d'amplitude 218, en référence aux figures 4 à 6.

Ce démodulateur d'amplitude est un circuit apte à traiter des signaux modulés avec une faible profondeur de modulation. On entendra par "faible profondeur de modulation" ou "faible modulation" une modulation dont le taux est typiquement inférieur ou égal à 50 %, de préférence inférieur à 20 %, le "taux" étant défini comme étant le ratio (Aₘₐₓ-Aₘᵢₙ)/(Aₘₐₓ +Aₘᵢₙ) des niveaux maximal Aₘₐₓ et minimal Aₘᵢₙ de l'amplitude du signal considéré.

En effet, dans le contexte particulier d'un objet portatif téléalimenté, il est avantageux, compte tenu des contraintes énergétiques, d'utiliser un taux de modulation faible afin de pouvoir disposer de suffisamment d'énergie pendant la période où la modulation est à l'état bas, puisque, du fait de la modulation en amplitude, le niveau d'énergie instantané fourni à l'objet portatif varie directement avec le niveau de la modulation.

La figure 4 illustre une première variante de réalisation possible, où le démodulateur est un démodulateur à seuil variable, adaptatif.

Le circuit comporte, après un étage de filtrage passe-bas optionnel 242, un comparateur 244, de préférence à hystérésis, dont l'entrée positive reçoit le signal b à démoduler (le cas échéant filtré par l'étage 242) et dont l'entrée négative reçoit ce même signal b, mais après traversée d'un étage RC 246, 248 faisant office d'intégrateur. La comparaison se fait ainsi entre, d'une part, la valeur instantanée du signal et, d'autre part, une valeur moyenne de ce signal, constituant le seuil de comparaison variable.

La figure 5 illustre une seconde variante possible de réalisation du démodulateur 218, qui est dans ce cas un démodulateur sensible aux variations d'amplitude.

Après un étage de filtrage passe-bas optionnel 242, le signal b est appliqué à un étage CR 250, 252 faisant office de différentiateur. Le signal en sortie est appliquée à la borne positive du comparateur 244 (ici encore de préférence à hystérésis) dont l'entrée négative est reliée à un potentiel fixe, par exemple la masse. Dans ce cas, le démodulateur est sensible aux variations de l'amplitude (du fait de l'étage dérivateur), indépendamment de la valeur moyenne du signal ; ce ne sont que les variations de cette valeur moyenne que détecte le comparateur.

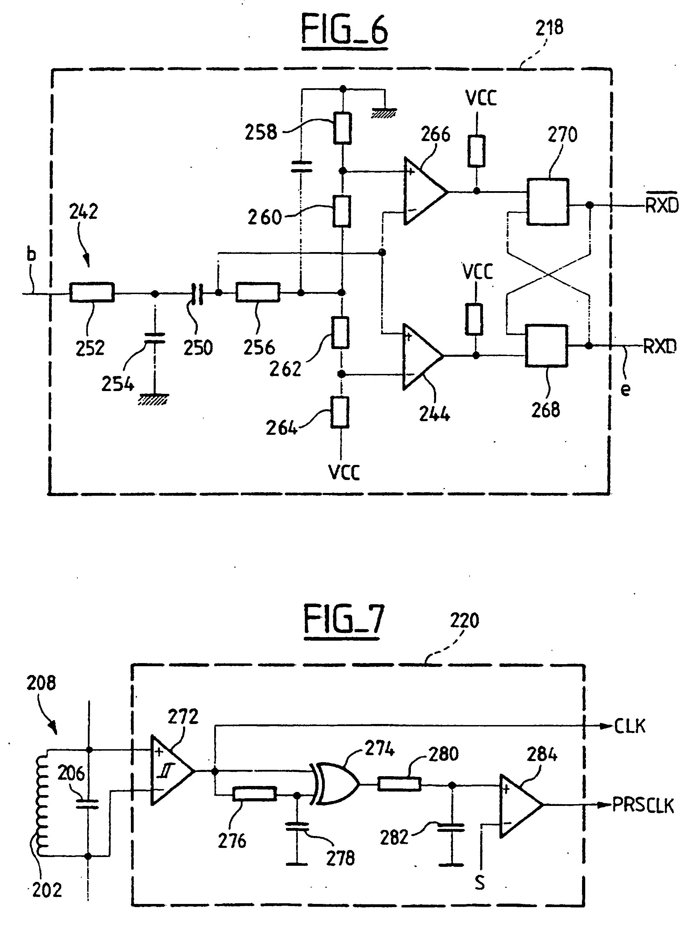

La figure 6 donne un exemple plus détaillé de réalisation d'un tel circuit démodulateur à détection des variations d'amplitude. Outre le filtre passe-bas 242 constitué de la résistance 252 et du condensateur 254, on trouve le condensateur série 250 faisant fonction de dérivateur en combinaison avec les résistances 256 à 264. Le signal ainsi différencié est appliqué à deux comparateurs symétriques 244, 266 dont les sorties agissent sur deux bascules 268, 270 montées en flip-flop de manière à produire deux signaux symétriques RXD et RXD/ mis en forme de façon appropriée.

La figure 7 illustre un exemple de réalisation du circuit extracteur et détecteur d'horloge 220.

Ce circuit reçoit en entrée un signal prélevé aux bornes du circuit résonnant 208 et appliqué aux entrées différentielles d'un comparateur à hystérésis 272 qui fournit le signal d'horloge CLK. Le signal d'horloge est appliqué également aux deux entrées d'une porte OU EXCLUSIF 274, directement sur l'une des entrées, et via un circuit RC 276, 278 sur l'autre entrée. Ce circuit RC, qui introduit un retard sur la transmission du signal capté, est choisi avec une constante de temps de l'ordre de 1/4f_{CLK} (f_{CLK} étant la fréquence d'horloge générée par le circuit 108 de la borne 100). Le signal de sortie de la porte 274 est ensuite moyenné par un circuit RC 280, 282 dont la constante de temps est très supérieure à 1/2.f_{CLK} (de préférence de l'ordre de 1/f_{CLK}) puis appliqué à l'une des entrées d'un comparateur 284 pour comparaison avec un seuil fixe S.

Le signal d'horloge CLK permet le cadencement approprié du circuit numérique de traitement 214, tandis que la sortie du comparateur 284 donne un signal PRSCLK indicatif de la présence ou non d'un signal d'horloge.

Dans le cas d'une carte mixte apte à fonctionner indifféremment en mode "sans contact" ou en mode "par contacts". le signal PRSCLK de présence/absence du signal d'horloge est avantageusement utilisé pour signaler au circuit numérique que l'objet portatif se trouve dans un environnement de type "sans contact" et décider des actions correspondantes telles que sélection du protocole de communication approprié, activation du régulateur shunt, PRSCLK étant utilisé pour produire INH/(voir description ci-dessus en référence à la figure 3), etc.

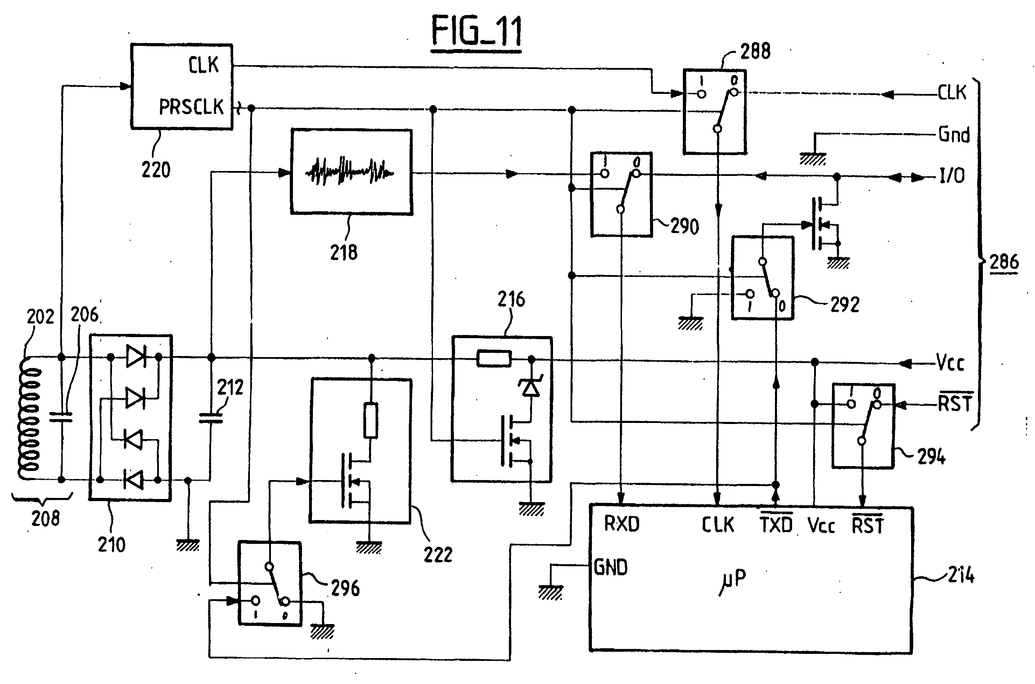

La figure 11 présente en détail les diverses commutations qui sont ainsi opérées automatiquement entre les modes "sans contact" et "par contacts". Les contacts 286 sont les contacts CLK (horloge), GND (masse), I/O (données), VCC (alimentation) et RST*i* (remise à zéro) de la norme ISO 7816-3, à laquelle on se reportera pour de plus amples détails. Les divers interrupteurs 288 à 296 sont tous représentés en position "par contacts" (référencée '0'), position par défaut, leur basculement vers la position "sans contact" (référencée '1') étant commandée par le signal PRSCLK délivré par le circuit 220, révélant la présence d'un signal d'horloge issu des moyens de redressement et de filtrage.

L'extraction d'un signal d'horloge est également particulièrement avantageuse lorsque l'on souhaite réaliser une modulation non pas en bande de base, mais en modulation de sous-porteuse, car la sous-porteuse peut être aisément générée par division de la fréquence d'horloge. Le circuit numérique 214 adjoint alors la sous-porteuse ainsi générée aux données à transmettre pour produire le signal TXD appliqué au circuit modulateur de charge 222.

On va maintenant décrire le fonctionnement de l'objet portatif, en référence aux chronogrammes des figures 8 à 10.

On va tout d'abord expliquer, en référence aux chronogrammes de la figure 8, la manière dont l'objet est alimenté et dont il récupère le signal d'horloge.

Le circuit accordé 208 capte une partie de l'énergie magnétique produite par la borne. Le signal alternatif a correspondant, illustré sur la figure 8, est redressé par le bloc 210 et filtré par le condensateur 212, pour donner une tension redressée filtrée b illustrée sur la figure 8. Pour un signal alternatif a avec une tension crête de 10 V, on obtient ainsi une tension redressée et filtrée ayant une tension crête de l'ordre de 8,5 V. Bien entendu, l'amplitude de la tension a, et donc de la tension b, dépend beaucoup de la distance entre objet et borne, l'amplitude étant d'autant plus importante que l'objet est près de la borne. L'étage régulateur 216 intervient pour compenser ces variations, en délivrant au circuit numérique 214 une tension stable, typiquement de l'ordre de 3 V (chronogramme d de la figure 8).

Ainsi, lorsque l'on se trouve assez loin de la borne, presque en limite de portée, la tension en b sera assez proche de la valeur requise de 3 V, la chute de tension entre b et d sera faible, le courant traversant le shunt 228 sera également très faible et la quasi-totalité du courant délivré par le circuit d'alimentation servira à alimenter le circuit numérique 214. On notera que, dans ce cas, le courant qui traverse le shunt 228 peut être aussi faible que quelques microampères seulement (courant minimum de polarisation).

En revanche, lorsque l'objet est très proche de la borne, la tension en b sera élevée, la différence de potentiel entre b et d sera également importante (plusieurs volts), et le courant traversant le shunt 228 sera élevé, l'élément résistif 230 et le shunt 228 dissipant alors l'énergie en excès.

Outre le rôle purement électrique de stabilisation de l'alimentation du circuit numérique 214, l'étage régulateur shunt procure plusieurs avantages dans le cadre du circuit que l'on a décrit.

En premier lieu, il permet de limiter l'excursion de tension en b, donc en a, lorsque l'objet est proche de la borne, du fait de la faible charge qui est présentée en aval du circuit accordé 208 : du fait du courant important circulant dans le shunt 228, la puissance recueillie non indispensable au fonctionnement du circuit numérique 214 est entièrement dissipée en chaleur.

Ceci est particulièrement intéressant lorsque le condensateur 206 du circuit accordé 208 est un élément réalisé en technologie monolithique intégrée, car on évite ainsi les risques de claquage dus à des surtensions. En effet, compte tenu des contraintes géométriques du circuit intégré, il n'est pas possible de réaliser des condensateurs présentant des tensions de claquage élevées. Or le circuit numérique 214, qui est bâti autour d'un microprocesseur, nécessite pour son alimentation une puissance relativement importante, donc un niveau de champ magnétique assez élevé, qui pourrait créer des surtensions dans le circuit accordé si les précautions indiquées n'étaient pas prises.

En second lieu, comme on l'expliquera plus en détail par la suite, le régulateur shunt a pour effet d'égaliser les variations instantanées du courant d'alimentation du circuit numérique (la consommation d'un tel circuit n'est en effet pas constante) et d'éviter leurs répercussions sur le fonctionnement des autres organes du circuit, pour la communication aussi bien de l'objet vers la borne que de la borne vers l'objet ; en effet, des variations indésirables de courant ou de tension pourraient introduire des erreurs de modulation ou de démodulation.

Enfin, dans le cas où l'objet est en limite de portée de la borne, et où il ne reçoit donc de la borne qu'un signal juste suffisant pour alimenter le circuit numérique, la conception du circuit permet d'éviter tout gaspillage d'énergie, puisque le courant dans le shunt 228 est pratiquement nul. Ainsi, toute l'énergie disponible captée par le circuit accordé peut être utilisée pour faire fonctionner le circuit numérique.

En ce qui concerne le signal d'horloge, le circuit extracteur d'horloge 220 permet de transformer le signal alternatif a capté aux bornes du circuit accordé 208 en une série c d'impulsions d'horloge parfaitement calibrées.

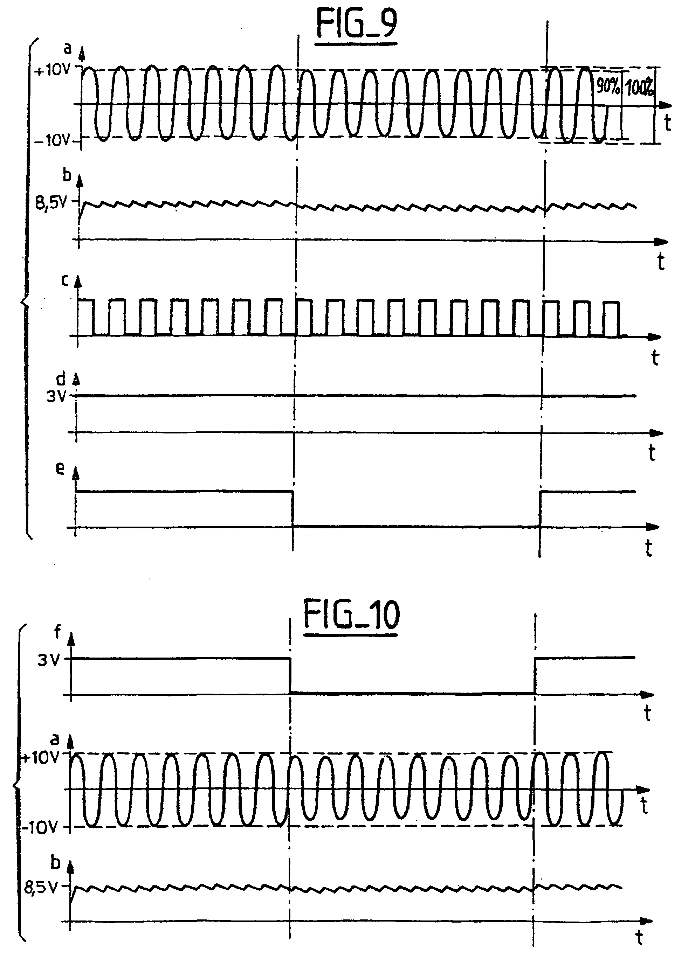

On va maintenant décrire la manière dont les informations sont transmises de la borne vers l'objet, en référence aux chronogrammes de la figure 9.

Pour transmettre des informations à l'objet, la borne module en amplitude le champ magnétique qu'elle produit. Les informations envoyées étant binaires, cette modulation se résume à diminuer d'une quantité prédéterminée, par exemple de 10 %, l'amplitude du signal. Une telle diminution correspond par exemple à l'envoi d'un '0' logique, l'amplitude restant maximale pour un '1' logique: voir sur la figure 9 le chronogramme a du signal capté par le circuit accordé 208.

Ceci se traduit après redressement et filtrage, en b, par une diminution de l'amplitude du signal redressé et filtré. Cette diminution d'amplitude est détectée par le démodulateur d'amplitude 218, qui fournit en sortie le signal logique e appliqué au circuit numérique.

On notera que la diminution d'amplitude résultant de la modulation du signal envoyé par la borne est sans effet sur l'extracteur d'horloge (signal c) et sur la tension d'alimentation fournie au circuit numérique (signal d).

Si des techniques autres que la modulation d'amplitude étaient employées dans le sens borne → objet, par exemple une modulation de phase comme cela est enseigné par de nombreux documents de l'art antérieur, le type de modulation serait sans incidence directe sur le fonctionnement du circuit régulateur de l'invention ; toutefois, ce circuit est particulièrement avantageux dans le cas d'une modulation d'amplitude puisque, comme on l'a expliqué, il permet de pallier parfaitement les inconvénients divers liés au choix de cette technique.

On va maintenant expliquer la manière dont les informations sont transmises, en retour, de l'objet vers la borne, en référence aux chronogrammes de la figure 10.

Comme on l'a indiqué plus haut, dans le mode de réalisation illustré on procède par variation de charge, c'est-à-dire variation contrôlée du courant consommé par le circuit accordé 208. A cet effet, on commute sélectivement, par le composant 226, l'élément résistif 224, la résistance étant par exemple commutée lorsque l'objet veut envoyer un '0' logique, et non commutée pour un '1' logique.

Lorsque la résistance est commutée, c'est-à-dire pour un '0' logique, la tension a diminue du fait de la charge supplémentaire. La valeur de la résistance est bien entendu choisie pour que cette chute de tension permette néanmoins de conserver une alimentation correcte du circuit numérique.

On peut. cependant, se trouver confronté à une difficulté lorsque l'on est en limite de portée de la borne. En effet, dans ce cas, le courant qu'il faut dériver dans l'élément résistif 224 pour engendrer la modulation peut être encore trop élevé pour que le circuit numérique puisse continuer à fonctionner convenablement.

Dans ce cas, on prévoit avantageusement, avant que l'objet ne commence à envoyer des informations vers la borne, de placer le circuit numérique dans un mode "basse consommation" afin de pouvoir consommer plus de courant dans l'élément résistif 224 sans menacer l'alimentation du circuit numérique.

Ceci peut être par exemple réalisé par le programme du microprocesseur du circuit numérique qui, avant de commencer à envoyer des données vers la borne, va placer la routine d'émission en RAM (dont l'accès consomme peu d'énergie) et débrancher la mémoire EPROM (dont l'accès exige une énergie notablement supérieure). En d'autres termes, le circuit, numérique se met en mode "basse consommation" pour disposer d'une réserve importante de courant, qui va être consommée dans la résistance de modulation pour l'envoi des messages vers la borne.

De plus, si l'on peut faire passer un courant de modulation plus important dans l'élément résistif 224 (en choisissant une valeur de résistance plus faible) la modulation sera mieux vue côté borne, ce qui permettra de se contenter, pour la borne, de moyens de détection moins élaborés et/ou de disposer d'un meilleur rapport signal/bruit.

Il est possible, toujours dans le sens objet → borne, d'utiliser d'autres types de modulations ou des variantes, par exemple, comme indiqué plus haut, la modulation d'une sous-porteuse qui pilote la variation de charge au lieu d'une modulation de la charge directement par le signal à transmettre.

## Revendications

1. Un système d'échange de données, comprenant :
- au moins une borne (100) comportant :
• un circuit résonnant accordé (106) comprenant une première bobine (102) apte à rayonner un champ magnétique en espace libre,
• des moyens d'émission de données, coopérant avec la première bobine et comprenant des moyens générateurs de signal alternatif (108) et des moyens modulateurs d'amplitude (110), et
• des moyens de réception de données (118, 116), coopérant avec la première bobine ; et
- au moins un objet portatif (200), apte à coopérer avec la borne par communication sans contact et cet objet portatif comportant un circuit électronique téléalimenté par la borne,
ce circuit électronique comportant :
• un circuit résonnant accordé (208) comprenant une seconde bobine (202) apte à interagir avec le champ magnétique modulé en provenance de la borne pour capter un signal de champ magnétique induit (a) et produire en réponse une perturbation modulée du champ magnétique ;
• des moyens convertisseurs, coopérant avec la seconde bobine, pour transformer le signal de champ magnétique induit (a) en une tension continue (d) d'alimentation dudit circuit électronique, ces moyens convertisseurs comprenant un étage de redressement (210) et un étage de filtrage (212) ;
• des moyens d'émission et des moyens de réception de données, coopérant également avec la seconde bobine, les moyens de réception comportant des moyens (218) démodulateurs de l'amplitude du signal capté par la bobine,
ces moyens démodulateurs (218) :
· opérant sur un signal (b) délivré en sortie des étages de redressement (210) et de filtrage (212),
· et délivrant un signal logique de données (e) ;
• et des moyens numériques de traitement (214),
système **caractérisé en ce que** :
- la communication sans contact est une communication où au moins une fonction de l'objet portatif est cadencée par un signal d'horloge produit à distance par la borne,
- les moyens d'émission de données de la borne comportent un générateur d'horloge (108) apte à générer ledit signal d'horloge,
- les moyens modulateurs d'amplitude de la borne sont des moyens aptes à produire une modulation du champ magnétique émis par la borne avec un taux de modulation inférieur ou égal à 50 %, et
- l'objet portatif comporte des moyens détecteurs et extracteurs d'horloge (220), aptes à recevoir un signal (a ; b) en provenance du circuit accordé de l'objet portatif et à en extraire ledit signal d'horloge (CLK),
et **en ce que** les moyens numériques de traitement (214) reçoivent :
· d'une part, ledit signal logique de données (e) délivré par les moyens démodulateurs d'amplitude (218), et
· d'autre part, le signal d'horloge (CLK) délivré par les moyens détecteurs et extracteurs d'horloge (220), pour le cadencement des moyens numériques de traitement (214).

2. Le système de la revendication 1, dans lequel ledit taux de modulation est inférieur à 20 %.

3. Un objet portatif (200) pour la communication sans contact avec une borne, cet objet portatif comportant un circuit électronique téléalimenté par la borne, ce circuit comprenant :
• un circuit résonnant accordé (208) comprenant une bobine (202) apte à interagir avec un champ magnétique modulé rayonné en espace libre par une borne pour capter un signal de champ magnétique induit (a) et produire en réponse une perturbation modulée du champ magnétique ;
• des moyens convertisseurs, coopérant avec la bobine, pour transformer le signal de champ magnétique induit (a) en une tension continue (d) d'alimentation dudit circuit électronique, ces moyens convertisseurs comprenant un étage de redressement (210) et un étage de filtrage (212) ;
• des moyens d'émission et des moyens de réception de données, coopérant également avec la bobine, les moyens de réception comportant des moyens (218) démodulateurs de l'amplitude du signal capté par la bobine,
ces moyens démodulateurs (218) :
· opérant sur un signal (b) délivré en sortie des étages de redressement (210) et de filtrage (212),
· et délivrant un signal logique de données (e) ;
• et des moyens numériques de traitement (214),
objet portatif **caractérisé en ce que**, la modulation du champ magnétique émis par la borne présente un taux de modulation inférieur ou égal à 50%:
- au moins une fonction de l'objet portatif est cadencée par un signal d'horloge produit à distance par la borne, et
- l'objet portatif comporte des moyens détecteurs et extracteurs d'horloge (220), aptes à recevoir un signal (a ; b) en provenance du circuit accordé et à en extraire ledit signal d'horloge (CLK),
et **en ce que** les moyens numériques de traitement (214) reçoivent :
· d'une part, ledit signal logique de données (e) délivré par les moyens démodulateurs d'amplitude (218), et
· d'autre part, le signal d'horloge (CLK) délivré par les moyens détecteurs et extracteurs d'horloge (220), pour le cadencement des moyens numériques de traitement (214).

4. L'objet portatif de la revendication 3, dans lequel les moyens démodulateurs d'amplitude sont des moyens (244, 246, 248) à seuil variable comparant la valeur instantanée du signal appliqué en entrée à une valeur moyenne de ce même signal.

5. L'objet portatif de la revendication 3, dans lequel les moyens démodulateurs d'amplitude sont des moyens (244, 250, 252 ; 250-268) sensibles au taux d'accroissement de la valeur instantanée du signal appliqué.

6. L'objet portatif de la revendication 3, dans lequel les moyens convertisseurs comprennent en outre, en aval des étages de redressement (210) et de filtrage (212), un étage stabilisateur (216) comportant un élément régulateur shunt (228) monté en dérivation entre les bornes d'alimentation (VCC, GND) du circuit à alimenter et associé à un composant résistif (230) monté en série dans la ligne d'alimentation du circuit,
l'élément régulateur shunt prélevant et dérivant une fraction variable du courant d'alimentation du circuit de sorte que l'élément résistif et l'élément régulateur shunt dissipent le surcroît éventuel d'énergie non nécessaire au fonctionnement du circuit,
de manière à, corrélativement, stabiliser la tension d'alimentation (d) aux bornes du circuit, limiter l'excursion de tension (a) aux bornes de l'élément accordé en amont et empêcher que les variations du courant consommé n'influent en amont sur l'amplitude du signal à démoduler.

7. L'objet portatif de la revendication 3, comprenant des moyens (240) pour inhiber sélectivement et temporairement le fonctionnement du régulateur shunt.

8. L'objet portatif de la revendication 7, dans lequel il est prévu des moyens de détection du type de communication, sans contact ou par contacts, et où l'inhibition sélective et temporaire du fonctionnement du régulateur shunt est opérée en réponse à la détection d'un type de communication par contacts.

9. L'objet portatif de la revendication 3, dans lequel l'ensemble dudit circuit électronique (202, 204), à l'exception de la bobine (202) du circuit résonnant accordé (208), est réalisé en technologie monolithique intégrée.

10. L'objet portatif de la revendication 3, dans lequel, les moyens d'émission de données sont des moyens (222) opérant une modulation du courant consommé en aval du circuit accordé, le circuit électronique est susceptible de deux modes de fonctionnement, en consommation nominale et en basse consommation, et il est prévu des moyens pour placer en mode basse consommation le circuit électronique avant que les moyens d'émission de données ne commencent à opérer ladite modulation.

## Patentansprüche

1. System zum Austausch von Daten, umfassend:
- mindestens eine Anschlussklemme (100), aufweisend:
• einen abgestimmten Schwingkreis (106), der eine erste Spule (102) aufweist, welche geeignet ist, ein Magnetfeld in den freien Raum auszustrahlen,
• Mittel zur Emission von Daten, die mit der ersten Spule zusammenwirken und Mittel zum Erzeugen eines Wechselstromsignals (108) und Mittel zum Modulieren einer Amplitude (110) aufweisen, und
• Mittel zum Empfangen von Daten (118, 116), die mit der erste Spule zusammenwirken; und
- mindestens ein tragbares Objekt (200), geeignet, um mit der Anschlussklemme zusammen zu wirken über kontaktlose Kommunikation und wobei dieses tragbare Objekt einen elektronischen Schaltkreis aufweist, welcher durch die Anschlussklemme ferngespeist wird,
wobei der elektronische Schaltkreis aufweist:
• einen abgestimmten Schwingkreis (208), der eine zweite Spule (202) aufweist, welche geeignet ist, mit dem modulierten Magnetfeld zu interagieren, das von der Anschlussklemme herrührt, um ein Signal des induzierten Magnetfeldes (a) aufzunehmen und als Antwort eine modulierte Störung des Magnetfeldes zu produzieren;
• Umwandlungsmittel, die mit der zweiten Spule zusammenwirken, um das Signal des induzierten Magnetfeldes (a) in eine kontinuierliche Spannung (d) zur Versorgung des elektronischen Schaltkreises zu transformieren, wobei diese Umwandlungsmittel eine Entzerrungsstufe (210) und eine Filterstufe (212) aufweisen;
• Mittel zum Aussenden und Mittel zum Empfangen von Daten, welche gleichfalls mit der zweiten Spule zusammenwirken, wobei die Empfangsmittel Mittel (218) zur Demodulation der Amplitude des durch die Spule aufgenommenen Signals umfassen,
wobei diese Demodulationsmittel (218):
· ein Signal (b) bearbeiten, welches von dem Ausgang der Stufen der Entzerrung (210) und der Filterung (212) geliefert wird,
· und ein logisches Datensignal liefern (e);
• und Rechner-Verarbeitungsmittel (214),
wobei das System **dadurch gekennzeichnet ist, dass**:
- die kontaktlose Kommunikation eine Kommunikation ist, wo mindestens eine Funktion des tragbaren Objekts durch ein Taktsignal getaktet ist, welches über eine Distanz durch die Anschlussklemme produziert wird,
- die Mittel zum Aussenden von Daten der Anschlussklemme einen Taktgenerator (108) umfassen, der geeignet ist, das Taktsignal zu erzeugen,
- die Mittel zur Modulation der Amplitude der Anschlussklemme Mittel sind, die geeignet sind, eine Modulation des durch die Anschlussklemme ausgesendeten Magnetfeldes zu produzieren, mit einem Modulationsniveau kleiner oder gleich 50 %, und
- das tragbare Objekt Mittel zum Erfassen und Extrahieren des Takts (220) aufweist, geeignet, ein Signal (a; b) zu empfangen, das von dem abgestimmten Schaltkreis des tragbaren Objekts herrührt, und das Taktsignal (CLK) hieraus zu extrahieren,
und dadurch, dass die Rechner-Verarbeitungsmittel (214) empfangen:
· einerseits, das logische Datensignal (e), das durch die Mittel zur Demodulierung der Amplitude (218) geliefert wird, und
· andererseits, das Taktsignal (CLK), das durch die Mittel zur Erfassung und Extrahierung des Takts (220) geliefert wird, für die Taktung der Rechner-Verarbeitungsmittel (214).

2. System gemäß Anspruch 1, in welchem der Modulationsgrad kleiner als 20% ist.

3. Tragbares Objekt (200) für die kontaktlose Kommunikation mit einer Anschlussklemme, wobei das tragbare Objekt einen durch die Anschlussklemme femgespeisten elektronischen Schaltkreis aufweist, wobei der Schaltkreis aufweist:
• einen abgestimmten Schwingkreis (208), der eine Spule (202) aufweist, die geeignet ist mit einem modulierten magnetischen Feld zu interagieren, das durch eine Anschlussklemme in den freien Raum ausgestrahlt wird, um ein Signal des induzierten Magnetfeldes (a) zu erfassen und in Antwort eine modulierte Störung des Magnetfeldes zu produzieren;
• Konvertierungsmittel, die mit der Spule zusammenwirken, um das Signal des induzierten Magnetfeldes (a) in eine kontinuierliche Spannung (d) der Versorgung des elektronischen Schaltkreises umzuwandeln, wobei die Konvertierungsmittel eine Entzerrungsstufe (210) und eine Filterstufe (212) aufweisen;
• Mittel zum Aussenden und Mittel zum Empfangen von Daten, die gleichfalls mit der Spule zusammenarbeiten, wobei die Empfangsmittel Mittel zur Modulation der Amplitude (218) des durch die Spule erfassten Signals umfassen,
wobei die Mittel zur Demodulation (218):
· ein Signal (b) bearbeiten, das durch die Ausgänge der Stufen zur Entzerrung (210) und zur Filterung (212) geliefert wird,
· und ein logisches Datensignal (e) liefern;
• und Rechner-Verarbeitungsmittel (214),
wobei das tragbare Objekt **dadurch gekennzeichnet ist, dass** die Modulation des ausgesendeten Magnetfeldes durch die Anschlussklemme einen Modulationsgrad kleiner oder gleich 50 % aufweist:
- mindestens eine Funktion des tragbaren Objekts getaktet ist durch ein Taktsignal, welches über eine Distanz durch die Anschlussklemme produziert wird, und
- das tragbare Objekt Mittel zur Erfassung und zum Extrahieren des Takts (220) aufweist, die geeignet sind, ein Signal (a; b) zu empfangen, das von dem abgestimmten Schaltkreis herrührt, und hieraus das Taktsignal (CLK) zu extrahieren,
und dadurch, dass die Rechner-Verarbeitungsmittel (214) empfangen:
· einerseits, das logische Datensignal (e), das durch die Mittel zur Demodulierung der Amplitude (218) geliefert wird, und
· andererseits, das Taktsignal (CLK), das durch die Mittel zur Erfassung und Extrahierung des Takts (220) geliefert wird, für die Taktung der Rechner-Verarbeitungsmittel (214).

4. Tragbares Objekt gemäß Anspruch 3, in welchem die Mittel zur Demodulation der Amplitude Mittel (244, 246, 248) mit variabler Schwelle sind, welche den augenblicklichen Wert des am Eingang angelegten Signals mit einem Mittelwert desselben Signals vergleichen.

5. Tragbares Objekt gemäß Anspruch 3, in welchem die Mittel zur Demodulation der Amplitude Mittel (244, 250, 252; 250 - 268) sind, die empfindlich gegenüber der Zuwachsrate des augenblicklichen Wertes des angelegten Signals sind.

6. Tragbares Objekt gemäß Anspruch 3, in welchem die Konvertierungsmittel ferner umfassen, stromabwärts von den Stufen zur Entzerrung (210) und zur Filterung (212), eine Stabilisationsstufe (216), die ein Shunt-Regelungsmittel (228) aufweist, das parallel zwischen den Versorgungsanschlüssen (VCC, GND) des zu versorgenden Schaltkreises montiert ist und mit einem resistiven Bestandteil (230) verbunden ist, welches in Reihe in der Versorgungsleitung des Schaltkreises eingebaut ist,
wobei das Shunt-Regelungselement einen variablen Bruchteil des Versorgungsstroms des Schaltkreises abgreift und ableitet, derart, dass das resistive Element und das Shunt-Regelungselement den eventuellen Zuwachs nicht für den Betrieb des Schaltkreises notwendiger Energie disspieren,
um, entsprechend, die Versorgungsspannung (d) an den Anschlussklemmen des Schaltkreises zu stabilisieren, die Abweichung der Spannung (a) an den Anschlussklemmen des abgestimmten Elements stromaufwärts zu begrenzen und zu vermeiden, dass Schwankungen des verbrauchten Stroms die Amplitude des zu demodulierenden Signals stromaufwärts beeinflussen.

7. Tragbares Objekt gemäß Anspruch 3, welches Mittel (240) aufweist, um selektiv und vorübergehend den Betrieb des Shunt-Reglers zu unterdrükken.

8. Tragbares Objekt gemäß Anspruch 7, in welchem vorgesehen sind Mittel zur Erfassung des Typs der Kommunikation, ohne Kontakt oder durch Kontakt, oder wo die selektive und zeitweilige Unterdrückung des Betriebs des Shunt-Reglers ausgeführt wird in Antwort auf die Erfassung eines Typs der Kommunikation über Kontakte.

9. Tragbares Objekt gemäß Anspruch 3, in welchem die Gesamtheit des elektronischen Schaltkreises (202, 204), mit Ausnahme der Spule (202) des abgestimmten Schwingkreises (208), in monolithischer integrierter Technologie verwirklicht wird.

10. Tragbares Objekt gemäß Anspruch 3, in welchem die Mittel zu Aussendung von Daten Mittel (222) sind, die eine Modulation des verbrauchten Stroms stromabwärts des abgestimmten Schaltkreises durchführen, der elektronische Schaltkreis für zwei Betriebsmodi geeignet ist, der des nominalen Verbrauchs und des Niedrigverbrauchs, und der mit Mitteln versehen ist, um den elektronischen Schaltkreis in den Niedrigverbrauchmodus zu versetzen, bevor die Mittel zur Aussendung von Daten die Modulation auszuführen beginnen.

## Claims

1. A system for exchanging data, comprising:
- at least one terminal (100) comprising:
• a tuned resonant circuit (106) comprising a first coil (102) adapted to radiate a magnetic field in free space,
• data transmission means, co-operating with the first coil and comprising alternating signal generator means (108) and amplitude modulating means (110), and
• data reception means (118,116), co-operating with the first coil; and
- at least one portable object (200), adapted to co-operate with the terminal by contactless communication and said portable object comprising an electronic circuit that is remotely powered by the terminal,
said electronic circuit comprising:
• a tuned resonant circuit (208) comprising a second coil (202) adapted to interact with the modulated magnetic field coming from the terminal in order to pick up an induced magnetic field (a) and produce in response a modulated disturbance of the magnetic field;
• converter means, co-operating with the second coil, for transforming the induced magnetic field signal (a) into a DC voltage (d) for powering said electronic circuit, said converter means comprising a rectifier stage (210) and a filter stage (212);
• data transmission and data reception means, also co-operating with the second coil, the reception means comprising means (218) for demodulating the amplitude of the signal picked up by the coil,
said demodulator means:
· operating on a signal (b) issued at the output of the rectifier (210) and filter (212) stages,
· and issuing a logical data signal (e);
• and digital processing means (214),
the system being **characterized in that**:
- the contactless communication is a communication in which at least one function of the portable object is clocked by a clocked signal remotely generated by the terminal,
- the data transmission means of the terminal include a clock generator (108) adapted to generate said clock signal,
- the amplitude modulator means of the terminal are means adapted to modulate the magnetic field transmitted by the terminal with a modulation rate less than 50 %, and
- the portable object comprises clock detecting and extracting means (220) adapted to receive a signal (a ; b) coming from the tuned circuit of the portable object and to extract therefrom said clock signal (CLK),
and **in that** the digital processing means (214) receive :
. on the one hand, said logical data signal (e) issued by the amplitude demodulator means (218), and
. on the other hand, the clock signal (CLK) issued by the clock detecting and extracting means (220), for clocking the digital processing means (214).

2. The system of claim 1, in which said modulation rate is less than 20 %.

3. A portable object (200) for contactless communication with a terminal, said portable object comprising an electronic circuit that is remotely powered by the terminal, said circuit comprising:
• a tuned resonant circuit (208) comprising a coil (202) adapted to interact with a modulated magnetic field radiated in free space by a terminal in order to pick up an induced magnetic field (a) and produce in response a modulated disturbance of the magnetic field;
• converter means, co-operating with the coil, for transforming the induced magnetic field signal (a) into a DC voltage (d) for powering said electronic circuit, said converter means comprising a rectifier stage (210) and a filter stage (212);
• data transmission and data reception means, also co-operating with the coil, the reception means comprising means (218) for demodulating the amplitude of the signal picked up by the coil,
said demodulator means:
· operating on a signal (b) issued at the output of the rectifier (210) and filter (212) stages,
· and issuing a logical data signal (e);
• and digital processing means (214),
the portable object being **characterized in that** the modulation of the magnetic field transmitted by the terminal has a modulation rate less than or equal to 50 %:
- at least one function of the portable object is clocked by a clocked signal remotely generated by the terminal, and
- the portable object comprises clock detecting and extracting means (220) adapted to receive a signal (a ; b) coming from the tuned circuit and to extract therefrom said clock signal (CLK),
and **in that** the digital processing means (214) receive :
. on the one hand, said logical data signal (e) issued by the amplitude demodulator means (218), and
. on the other hand, the clock signal (CLK) issued by the clock detecting and extracting means (220), for clocking the digital processing means (214).

4. The portable object of claim 3, in which the amplitude demodulator means are variable threshold means (244, 246, 248) comparing the instantaneous value of the signal inputted with a mean value of the same signal.

5. The portable object of claim 3, in which the amplitude demodulator means are means (244, 250, 252; 250-268) responsive to the rate at which the instantaneous value of the applied signal increases.

6. The portable object of claim 3, in which the converter means further comprise, downstream from the rectifier (210) and (210) filter stages, a stabilizer stage (216) including a shunt regulator element (228) connected as a bypass between the power supply terminals (VCC, GND) of the circuit to be powered and associated with a resistive component (230) connected in series in the power supply line of the circuit,
the shunt regulator element taking off and bypassing a variable fraction of the power supply current for the circuit so that the resistive element and the shunt regulator element dissipate any excess power that is not required for operation of the circuit,
in such a manner that, correspondingly, the power supply voltage (d) at the terminals of the circuit is stabilized, the voltage excursion (a) at the terminals of the upstream tuned element is limited, and variations in current consumption are prevented from having an influence upstream on the amplitude of the signal to be demodulated.

7. The portable object of claim 3, comprising means (240) for selectively and temporarily inhibiting operation of the shunt regulator.

8. The portable object of claim 7, in which means are provided for detecting the type of communication, contactless or via contacts, and in which the selective and temporary inhibition of the operation of the shunt regulator is operated in response to the detection of a type of communication via contacts.

9. The portable object of claim 3, in which the entire electronic circuit (202, 204), with the exception of the coil (202) of the tuned resonant circuit (208), is implemented in integrated monolithic technology.

10. The portable object of claim 3, in which the data transmitter means are means (222) that operate a modulation of the current consumed downstream from the tuned circuit, the electronic circuit is capable of operating in two power consumption modes, with nominal power consumption and with low power consumption, means being provided for putting the circuit into low power consumption mode before the data transmission means begin to perform said modulation.
